# EUROPEAN PATENT SPECIFICATION

(11) **EP 0 614 777 B1**
(45) Date of publication and mention of the grant of the patent: **05.02.1997**
(21) Application number: 94301749.1
(22) Date of filing: 11.03.1994
(51) Int. Cl.: B60J 10/06, B60J 10/04

(54) **Sealing strip**
Dichtungsband
Joint d'étanchéité

(30) Priority: 12.03.1993 GB 9305045
(43) Date of publication of application: 14.09.1994
(73) Proprietor: Standard Products Limited, Huntingdon Cambridgeshire PE18 6DD (GB)
(72) Inventor: Keys, James F., Saint Neots, Cambridgeshire PE19 3AB (GB); Sellens, David W.G., Huntingdon, Cambridgeshire PE17 5HR (GB)
(74) Representative: Jones, Michael Raymond

(56) References cited:
- EP-A- 0 182 318
- EP-A- 0 499 530
- FR-A- 2 648 887

## Description

This invention relates to an elongate sealing strip comprising a glass-run channel and an integral element for securing the strip to a flange around a window opening of a motor vehicle.

EP-A-0307304 discloses a sealing element comprising integrated glass run channel and flange finisher portions. A common carrier extends throughout the sealing element. The common carrier is rigid and imperforate in the outer wall of the glass run channel portion and flexible and perforate within the remainder of the sealing element to enable it to be easily roll-formed and to avoid read-through of the carrier to the exterior surface of the outer wall.

According to the present invention, there is provided an elongate sealing strip comprising an outer wall for retaining and guiding a window and an inner element for attaching to a vehicle body flange, a carrier member extending through the sealing strip to form a support for the outer wall and the inner element, wherein the carrier member comprises a rigid, imperforate part in the outer wall and a flexible, perforate part extending through the remainder of the strip (Elongate sealing strip of the type disclosed in EP-A-0 307 304); characterised in that the flexible perforate part is formed separately from the rigid imperforate part, with adjacent end regions of the rigid and flexible parts being in cooperation with each other.

The end regions of the rigid and flexible parts may interlock and therefore cooperate directly. Alternatively, the end regions may cooperate indirectly, for example via an elastomeric section of the strip.

The cooperating end regions of the rigid part and the flexible part each preferably terminate at a position in the region of the base of the outer wall.

In one embodiment, the cooperating end region of the rigid part is crimped or otherwise formed onto the end region of the flexible part. For instance, the end region of the rigid part may be bent in order to form a gripping profile for gripping the end region of the flexible part.

In another embodiment, the cooperating end region of the rigid part has a series of spaced apart projections adapted to engage corresponding recesses in the cooperating end region of the flexible part. Preferably, the projections are relatively short and evenly spaced. The corresponding recesses in the cooperating end region of the flexible part may be the recesses between alternate sprags of the perforated section.

In a further embodiment, the cooperating end region of the flexible part is provided with a series of spaced apart projections, a proportion of which are offset to define a gap which receives the cooperating end region of the rigid part. In this embodiment, it is preferred that alternate projections are offset to define the gap. As with the previous embodiment, the projections of the flexible part are preferably the sprags of the perforate section.

In a still further embodiment, the end regions of the flexible and rigid parts are planar and are bonded together. For example, the end regions may be chemically bonded together, for example by means of the conventional adhesive coating which is applied to the carrier parts prior to extrusion. Alternatively, the end regions may be welded together, for example laser welded together.

As has been previously mentioned, the end regions of the flexible and rigid parts may cooperate indirectly via an elastomeric section of the strip. Thus, for example, the adjacent ends are spaced apart and are therefore capable of a modest amount of movement with respect to each other, but are restrained from substantial movement by the rigidity of the elastomeric material. This restraint may be increased by providing a region of elastomer of enhanced rigidity into which the end regions of the rigid and flexible parts are embedded.

It is preferred that the inner element of the elongate sealing strip of the present invention includes a wall which is substantially parallel to the said outer wall, and is connected to the outer wall by a base wall in order to define a glass run channel. This glass run channel may be provided with conventional sealing lips and flocking (or other friction reducing material), in order to reduce friction with the pane of glazing material, in use.

The inner element of the sealing strip is preferably of a conventional flange-finisher variety comprising parallel side walls connected by a base to define a U-shaped channel. This channel may be provided with conventional ribs in order to grip the flange of the vehicle body. One of the side walls is a common wall with the glass run channel, the two channels being inversely disposed with respect to each other.

There is also provided, in accordance with the invention, secured or otherwise fastened around the periphery of a motor vehicle window opening, a sealing strip in accordance with the present invention.

The sealing strip of the present invention may be manufactured using an extrusion process in which the carrier (both parts) is introduced into the extruder and onto which there is then coated an elastomeric material in a manner known per se. The extrudate emerging from the extrusion die is subsequently cured (in the case of a rubber coating) or allowed to cool (for a plastics coating) and the extrudate is then cut to the desired length. These lengths of extrudate will possess a "secondary" structure in so far as the cross-section of the extrudate will have a particular configuration as required. However, a degree of tertiary structure may be imparted to the length of extrudate by bending, using conventional bending apparatus, the section. This operation is much more economic and simple to perform than the stretch-bending technique which is currently used for bending extrudates having solid steel carriers.

For a better understanding of the present invention, and to show how the same may be carried into effect, reference will now be made, by way of example only, to the accompanying drawings in which:
Figure 1 is a side elevational view of a car door including a seal in accordance with the present invention;
Figure 2 is a cross-section through an elongate sealing strip in accordance with one embodiment of the present invention;
Figure 3 is a cross-section through part of another sealing strip in accordance with the present invention;
Figure 3b is a partial view showing the interconnection of the two parts of the core of the sealing strip shown in Figure 3a;
Figure 4a is a partial cross-sectional view of another sealing strip in accordance with the present invention;
Figure 4b is a partial view of the interconnection between the two parts of the core of the sealing strip shown in Figure 4a;
Figures 5, 6 and 7a to 7e are further partial cross-sectional views of other embodiments of the present invention.

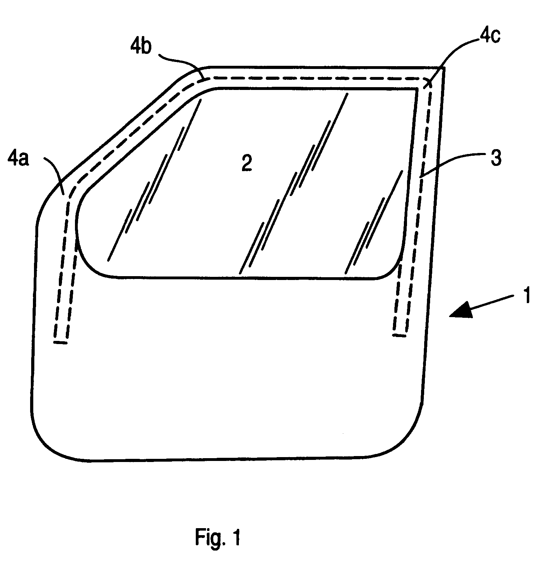

Figure 1 is a typical car door 1 having a vertically movable window 2 mounted in a combined flange finisher and glass run channel 3 in accordance with the present invention. The combined flange finisher and glass run channel 3 extends around the top of the window 2 and is bent at corners 4a, 4b and 4c to conform to the shape of the window opening.

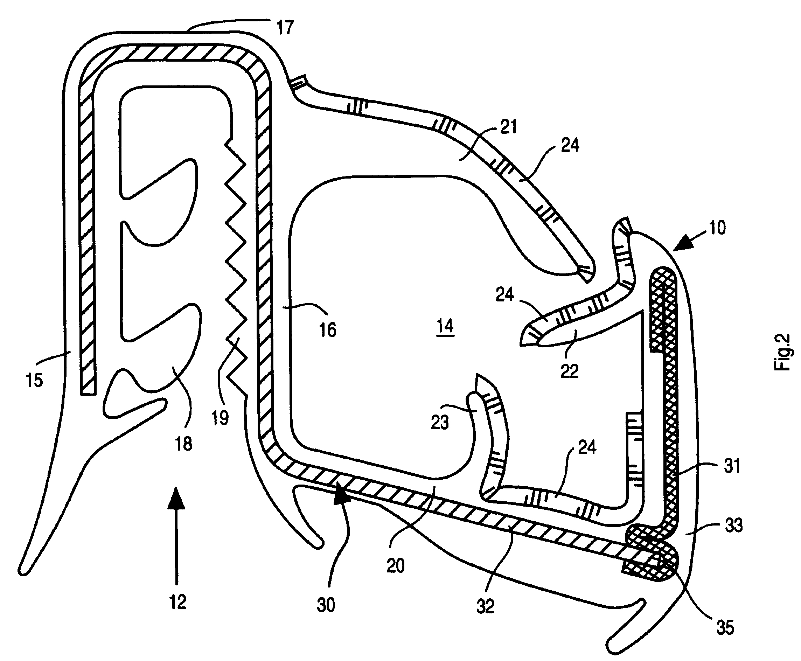

Figure 2 is a cross-sectional view of a sealing strip in accordance with the present invention. The sealing strip comprises an outer wall 10 for retaining and guiding a window and an inner element 12 for attaching to a vehicle body flange. The outer wall 10 defines one side wall of a glass run channel 14. The other side wall of the glass run channel 14 is defined by a wall of the inner element 12. Thus, inner element 12 includes sides walls 15 and 16, inner wall 16 of which defines the other side wall of the glass run channel 14 opposite outer wall 10. The inner element 12 for attaching the sealing component to a vehicle body flange also has a base 17 which, together with side walls 15 and 16 defines a U-shaped channel. The inner surfaces of the side walls 15 and 16 are provided with conformations 18, 19 which are known per se for securing a flange finisher to a flange of a vehicle. The glass run channel 14 includes a base 20. The glass run channel 14 and the flange finisher channel 12 are inversely disposed with respect to each other.

Projecting into the glass run channel 14 are sealing lips 21, 22 and 23 for stabilising a pane of glazing material and also for sealing purposes. The surfaces of these lips 21, 22, 23 may be coated with a friction reducing material 24 such as flock.

The sealing strip is provided with a metal core or carrier 30 which extends through the sealing component in order to provide rigidity thereto. In accordance with the invention, the carrier member comprises a rigid and imperforate part 31 in the outer wall and a separately formed perforate, flexible part 32 extending throughout the remainder of the component. The core is provided with an elastomeric coating 33, such as a rubber material or a plastics material. The sealing lips 21, 22, 23 are also formed from a elastomeric material, which may, or may not, be the same as that from which the coating on the core 30 is formed.

The rigid, imperforate part 31 of the carrier 30 may be formed of any hard metal, but is preferably formed of steel. The imperforate, flexible part 32 may be formed in a manner per se by lancing a solid metal (e.g. steel) strip which is then stretched in order to expand the perforations into apertures. Alternatively, apertures may be formed by punching metal out of the core. Any desired perforation pattern may be employed sufficient to impart the desired degree of flexibility to the strip.

In Figure 2, the rigid part 31 and the flexible part 32 cooperate as follows: the lower end of the rigid part is folded in order to provide a recess 35 into which the adjacent end of the flexible part 32 is engaged and then secured by comprising in order to hold the two parts 31, 32 together.

The arrangement in the remaining figures is similar to that shown in Figure 2 and, for the purposes of clarity, only the glass-run channel is shown and unnecessary reference numerals have been omitted.

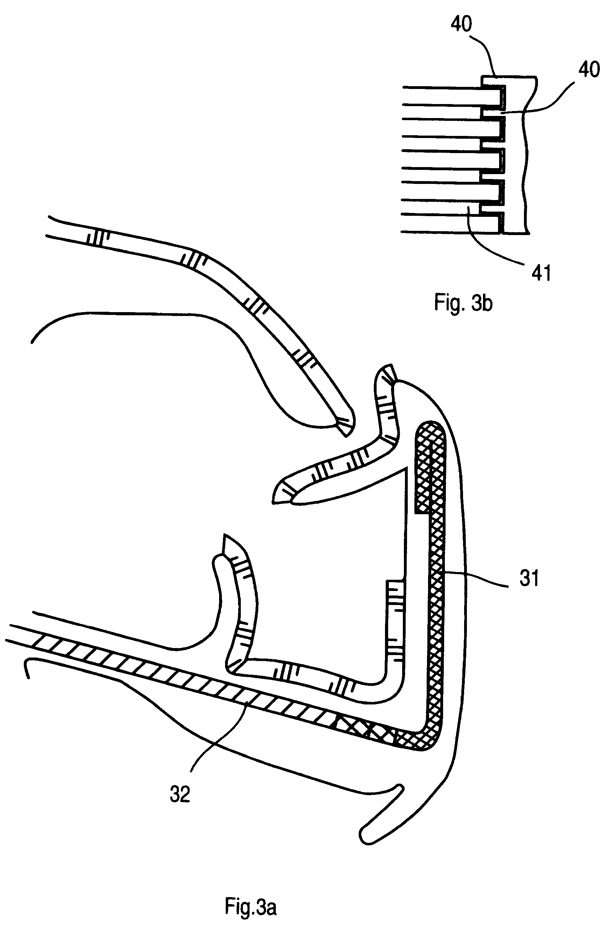

In the embodiment shown in Figures 3a and 3b the cooperating end of the rigid part 31 has a series of evenly spaced apart projections 40 adapted to engage corresponding recesses 41 in the corresponding end region of the flexible part. This gives a measure of lateral stability, but still gives some freedom of movement between the two parts 31, 32.

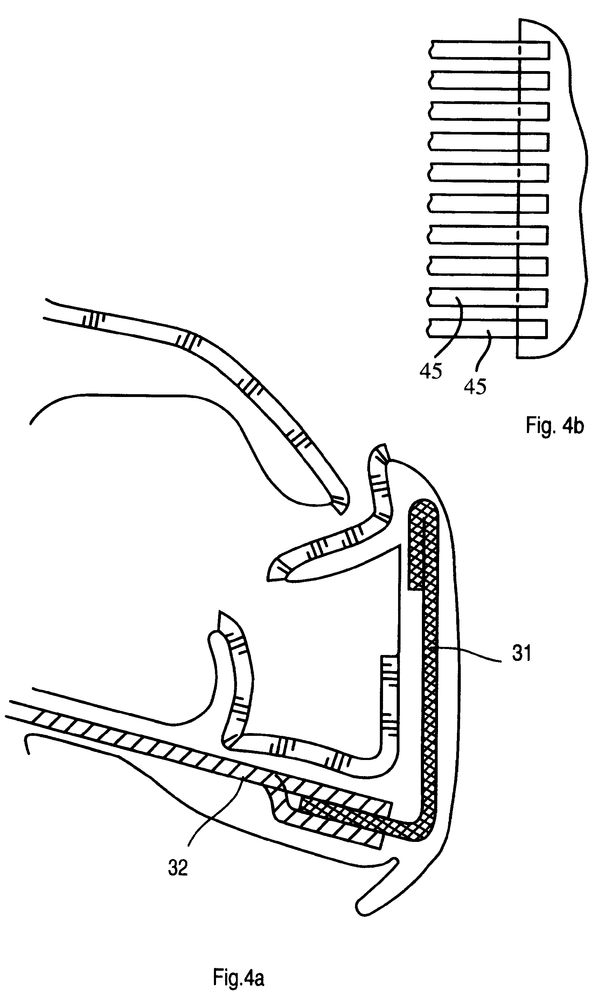

In the arrangement shown in Figures 4a and 4b, the cooperation of the two parts 31, 32 of the carrier is by means of the rigid part 31 having a return which is held between alternate offset projections of the flexible part.

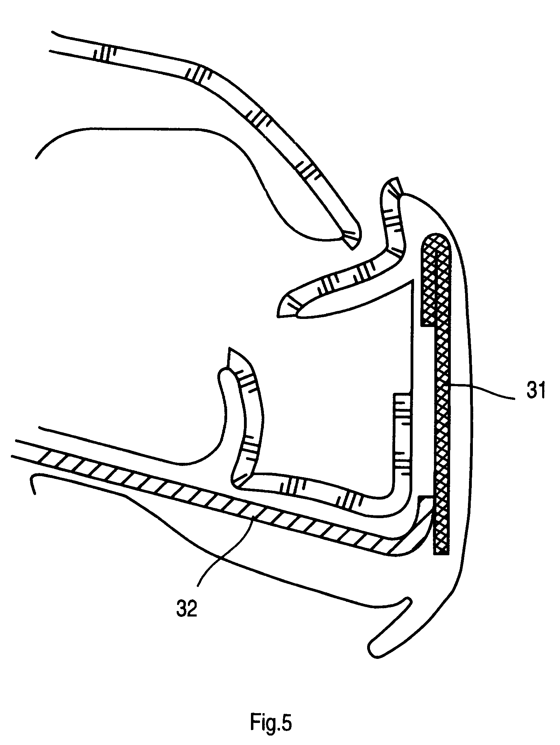

In Figure 5, the rigid part 31 and the flexible part 32 are chemically bonded, by virtue of the chemical coating which is provided on the carrier member in a manner known per se. Alternatively, this bonding could be achieved by laser welding.

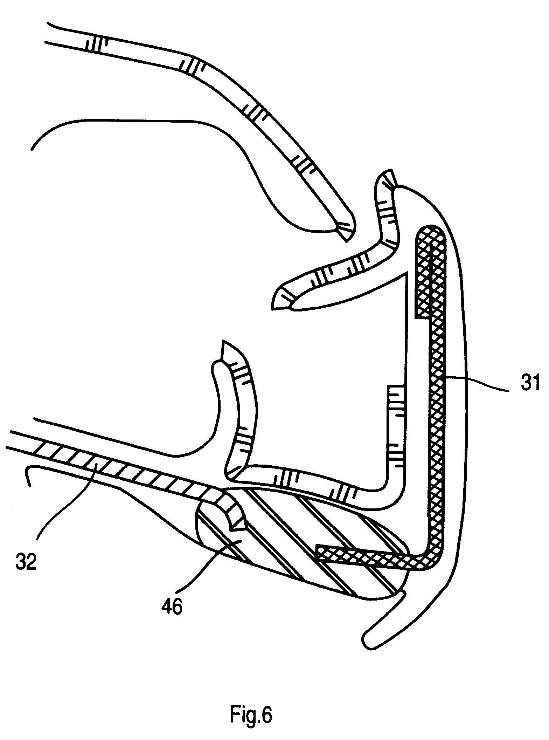

In Figure 6, the cooperating end regions of the flexible part 32 and the rigid part 31 are embedded in a region 46 of elastomer of enhanced rigidity, for example an EPOM rubber of hardness 90 IRMD 'A' compared with the remaining elastomer which may be an EPDM rubber of hardness 90 IRMD 'A'.

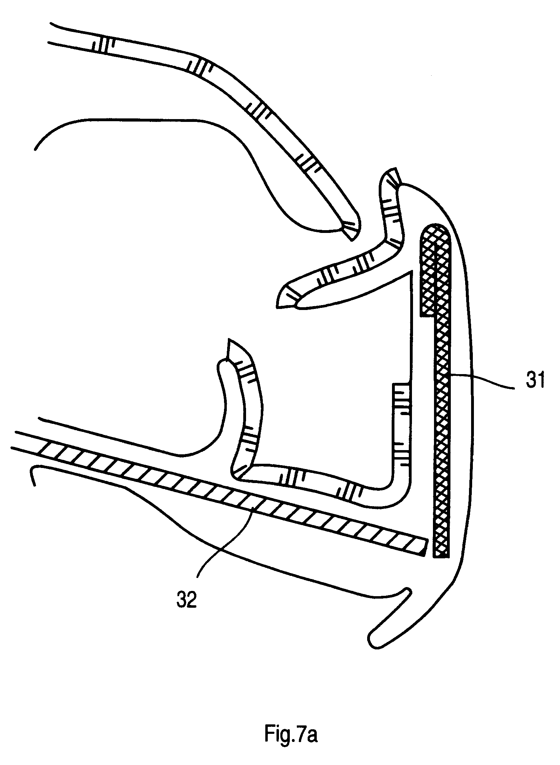

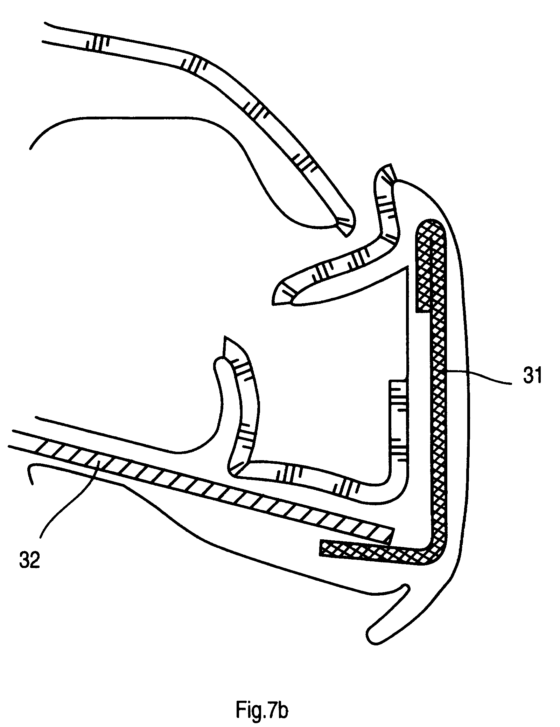

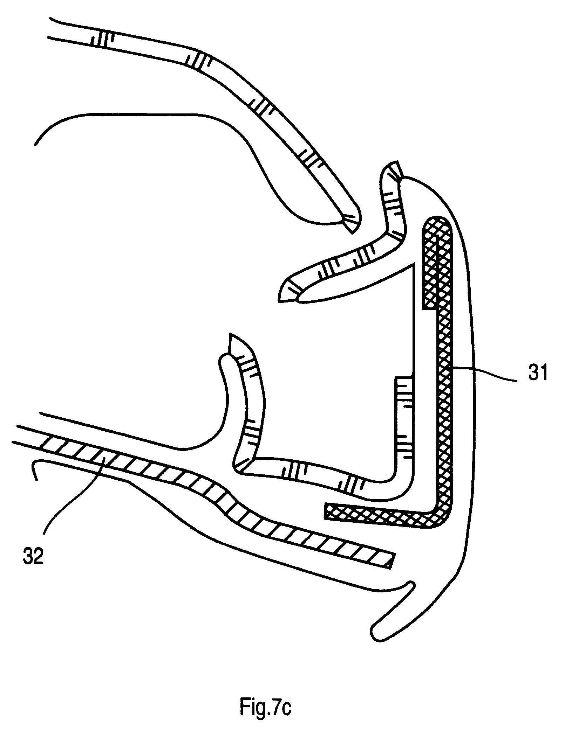

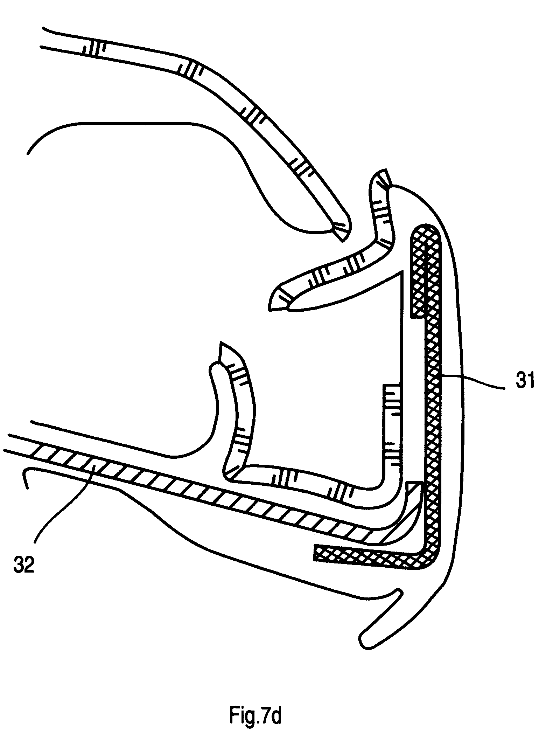

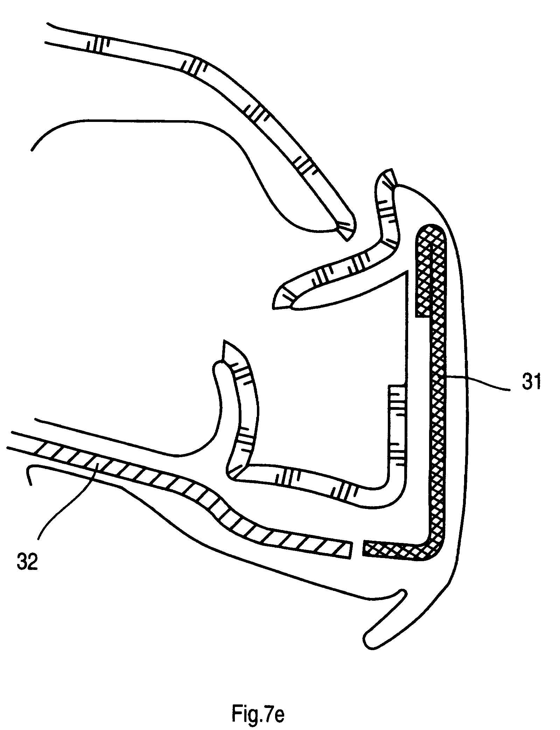

Figures 7a to 7e illustrate 5 alternative embodiments in which the cooperating ends regions of the flexible part 32 and the rigid part 31 are embedded in the elastomeric material of the core adjacent each other.

## Claims

1. An elongate sealing strip comprising an outer wall (10) for retaining and guiding a window and an inner element (12) for attaching to a vehicle body flange, a carrier member (30) extending through the sealing strip to form a support for the outer wall (10) and the inner element (12), wherein the carrier member (30) comprises a rigid, imperforate part (31) in the outer wall (10) and a flexible, perforate part (32) extending through the remainder of the strip; characterised in that the flexible perforate part (32) is formed separately from the rigid imperforate part (31), with adjacent end regions of the rigid and flexible parts (31, 32) being in cooperation with each other.

2. An elongate sealing strip according to claim 1, wherein the end regions, (35, -) of the rigid and flexible parts (31, 32) interlock and therefore cooperate directly.

3. An elongate sealing strip according to claim 1, wherein the end regions cooperate indirectly.

4. An elongate sealing strip according to claim 3, wherein the end regions cooperate indirectly via an elastomeric section (46) of the strip.

5. An elongate sealing strip according to claim 1 or 2, wherein the cooperating end region of the rigid part is crimped or otherwise formed onto the end region of the flexible part.

6. An elongate sealing strip according to claim 1 or 2, wherein the cooperating end region of the rigid part (31) has a series of spaced apart projections (40) adapted to engage corresponding recesses (41) in the cooperating end region of the flexible part (32).

7. An elongate sealing strip according to claim 1 or 2, wherein the cooperating end region of the flexible part (32) is provided with a series of spaced apart projections, a proportion of which are offset to define a gap which receives the cooperating end region of the rigid part (31).

8. An elongate sealing strip according to claim 1 or 2, wherein the end regions of the flexible and rigid parts are planar and are bonded together.

9. An elongate sealing strip according to claim 4, wherein the end regions of the flexible and rigid parts cooperate indirectly via an elastomeric section of the strip, the adjacent ends being spaced apart and being capable of flexing with respect to each other, but being restrained from substantial movement by the rigidity of the elastomeric material.

10. An elongate sealing strip according to claim 9, wherein restraint of relative movement between the rigid and flexible parts is be increased by providing a region of elastomer of enhanced rigidity into which the end regions of the rigid and flexible parts are embedded.

11. An elongate sealing strip according to any preceding claim, wherein the inner element of the elongate sealing strip of the present invention includes a wall which is substantially parallel to the said outer wall, and is connected to the outer wall by a base wall in order to define a glass run channel.

12. Secured or otherwise fastened around the periphery of a motor vehicle window opening, a sealing strip in accordance with any one of the preceding claims.

## Patentansprüche

1. Langgestrecktes Dichtungsband mit einer äußeren Wand (10) zum Halten und Führen eines Fensters und einem inneren Element (12) für das Anbringen an einem Fahrzeugkörperflansch, einem Trägerglied (30), welches sich über das Dichtungsband erstreckt, um eine Stütze für die äußere Wand (10) und das innere Element (12) zu bilden, wobei das Trägerglied (30) einen starren, nicht perforierten Teil (31) in der äußeren Wand (10) und einen flexiblen, perforierten Teil (32) aufweist, welcher sich durch den Rest des Bandes erstreckt, **dadurch gekennzeichnet**, daß der flexible perforierte Teil (32) getrennt von dem starren nicht perforierten Teil (31) gebildet ist, wobei aneinandergrenzende Endbereiche der starren und flexiblen Teile (31, 32) gemeinsam zusammenwirken.

2. Langgestrecktes Dichtungsband nach Anspruch 1, bei welchem die Endbereiche (35, -) des starren und des fexiblen Teils (31, 32) ineinandergreifen und aufgrund dessen unmittelbar zusammenwirken.

3. Langgestrecktes Dichtungsband nach Anspruch 1, bei welchem die Endbereiche mittelbar zusammenwirken.

4. Langgestrecktes Dichtungsband nach Anspruch 3, bei welchem die Endbereiche mittelbar über einen elastischen Abschnitt (46) des Bandes zusammenwirken.

5. Langgestrecktes Dichtungsband nach Anspruch 1 oder 2, bei welchem der zusammenwirkende Endbereich des starren Teils gecrimpt oder in anderer Weise über den Endbereich des flexiblen Teil geformt ist.

6. Langgestrecktes Dichtungsband nach Anspruch 1 oder 2, bei welchem der zusammenwirkende Endbereich des starren Teils (31) eine Reihe von im Abstand befindlicher Vorsprünge (40) hat, welche dazu geeignet sind, in entsprechender Rücksprünge (41) in dem zusammenwirkenden Endbereich des flexiblen Teils (32) einzugreifen.

7. Langgestrecktes Dichtungsband nach Anspruch 1 oder 2, bei welchem der zusammenwirkende Endbereich des flexiblen Teils (32) mit einer Reihe von im Abstand befindlicher Vorsprünge ausgestattet ist, von welchen ein Anteil versetzt ist, um einen Spalt zu bilden, welcher den zusammenwirkenden Endbereich des starren Teils (31) aufnimmt.

8. Langgestrecktes Dichtungsband nach Anspruch 1 oder 2, bei welchem die Endbereiche des flexiblen und des starren Teils eben und miteinander verbunden sind.

9. Langgestrecktes Dichtungsband nach Anspruch 4, bei welchem die Endbereiche des flexiblen und des starren Teils mittelbar über einen elastomeren Abschnitt des Bandes zusammenwirken, wobei die aneinandergrenzenden Enden sich im Abstand voneinander befinden und in der Lage sind, sich relativ zueinander zu biegen, aber aufgrund der Starrheit des Elastomermaterials an einer wesentlichen Bewegung gehindert sind.

10. Langgestrecktes Dichtungsband nach Anspruch 9, bei welchem die Beschränkung der Relativbewegung zwischen dem starren und dem flexiblen Teil dadurch erhöht ist, daß ein Bereich des Elastomers mit erhöhter Starrheit vorgesehen ist, in welchen die Endbereiche des starren und des flexiblen Teils eingebettet sind.

11. Langgestrecktes Dichtungsband nach einem der vorhergehenden Ansprüche, bei welchem das innere Element des langestreckten Dichtungsbandes der vorliegenden Erfindung eine Wand einschließt, welche im wesentlichen parallel zu der Außenwand verläuft und mit der Außenwand über eine Basiswand verbunden ist, um einen Glasführungskanal zu bestimmen.

12. Dichtungsband nach einem der vorhergehenden Ansprüche, welches gesichert oder auf andere Weise rund um den Umfang einer Kraftfahrzeugfensteröffnung festgelegt ist.

## Revendications

1. Joint d'étanchéité allongé comprenant une paroi extérieure (10) qui sert à retenir et guider une vitre et un élément intérieur (12) destiné à se fixer à un bord de la carcasse d'un véhicule, un élément de support (30) s'étendant dans le joint d'étanchéité pour former un support pour la paroi extérieure (10) et pour l'élément intérieur (12), dans lequel l'élément de support (30) comprend une partie rigide et non perforée (31) dans la paroi extérieure (10) et une partie souple et perforée (32) qui s'étend dans le reste du joint,
caractérisé en ce que la partie souple perforée (32) est formée séparément de la partie rigide non perforée (31), les régions d'extrémité adjacentes des parties rigide et souple (31, 32) coopérant l'une avec l'autre.

2. Joint d'étanchéité allongé selon la revendication 1, dans lequel les régions d'extrémité des parties rigide et souple (31, 32) s'interpénètrent et, par conséquent, coopèrent directement.

3. Joint d'étanchéité allongé selon la revendication 1, dans lequel les régions d'extrémité coopèrent indirectement.

4. Joint d'étanchéité allongé selon la revendication 3, dans lequel les régions d'extrémité coopèrent indirectement par l'intermédiaire d'une partie en élastomère (46) du joint.

5. Joint d'étanchéité allongé selon la revendication 1 ou 2, dans lequel la région d'extrémité qui coopère de la partie rigide est sertie ou mise en forme de quelque autre manière sur la région d'extrémité de la partie souple.

6. Joint d'étanchéité allongé selon la revendication 1 ou 2, dans lequel la région d'extrémité qui coopère de la partie rigide (31) comporte une série de protubérances espacées (40) capables d'accrocher des évidements correspondants (41) formés dans la région d'extrémité qui coopère de la partie souple (32).

7. Joint d'étanchéité allongé selon la revendication 1 ou 2, dans lequel la région d'extrémité qui coopère de la partie flexible (32) comporte une série de protubérances espacées dont une certaine proportion sont décalées pour définir un intervalle qui reçoit la région d'extrémité qui coopère de la partie rigide (31).

8. Joint d'étanchéité allongé selon la revendication 1 ou 2, dans lequel les régions d'extrémité des parties rigide et souple sont planes et jointes l'une à l'autre.

9. Joint d'étanchéité allongé selon la revendication 4, dans lequel les régions d'extrémité des parties rigide et souple coopèrent indirectement par l'intermédiaire d'une partie en élastomère du joint, les extrémités adjacentes étant espacées l'une de l'autre et capables de fléchir l'une par rapport à l'autre mais ne pouvant pas effectuer de déplacement important du fait de la rigidité du matériau élastomère.

10. Joint d'étanchéité allongé selon la revendication 9, dans lequel la limitation du mouvement relatif entre les parties rigide et souple est augmentée par la présence d'une région en élastomère de plus forte rigidité dans laquelle sont noyées les régions d'extrémité des parties souple et rigide.

11. Joint d'étanchéité allongé selon l'une quelconque des précédentes revendications, dans lequel l'élément intérieur du joint d'étanchéité allongé de la présente invention comporte une paroi qui est sensiblement parallèle à ladite paroi extérieure et est reliée à la paroi extérieure par une paroi de base afin de définir un canal de déplacement de glace.

12. Joint d'étanchéité allongé selon l'une quelconque des précédentes revendications, solidarisé ou fixé de quelque autre façon autour de la périphérie d'une ouverture de fenêtre d'un véhicule à moteur.
